(19) Europäisches Patentamt
European Patent Office
Office européen des brevets

(11) **EP 2 153 486 B1**

(12) **EUROPÄISCHE PATENTSCHRIFT**

(45) Veröffentlichungstag und Bekanntmachung des Hinweises auf die Patenterteilung:
**19.12.2012 Patentblatt 2012/51**

(21) Anmeldenummer: **08758088.2**

(22) Anmeldetag: **17.05.2008**

(51) Int Cl.:
**H01M 8/04** *(2006.01)*          **H01M 8/06** *(2006.01)*

(86) Internationale Anmeldenummer:
**PCT/DE2008/000847**

(87) Internationale Veröffentlichungsnummer:
**WO 2008/148368 (11.12.2008 Gazette 2008/50)**

(54) **HOCHTEMPERATUR-POLYMERELEKTROLYT-BRENNSTOFFZELLENSYSTEM SOWIE VERFAHREN ZUM BETREIBEN DESSELBEN**

HIGH-TEMPERATURE POLYMER ELECTROLYTE FUEL CELL SYSTEM AND METHOD FOR OPERATION OF SAME

SYSTÈME POLYÉLECTROLYTE-PILE À COMBUSTIBLE HAUTE TEMPÉRATURE, ET PROCÉDÉ PERMETTANT DE LE FAIRE FONCTIONNER

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **08.06.2007 DE 102007026652**

(43) Veröffentlichungstag der Anmeldung:
**17.02.2010 Patentblatt 2010/07**

(73) Patentinhaber: **Forschungszentrum Jülich GmbH 52425 Jülich (DE)**

(72) Erfinder:
• **DOHLE, Hendrik 52249 Eschweiler (DE)**
• **DEJA, Robert 52078 Aachen (DE)**
• **PETERS, Roland 52441 Linnich (DE)**

(74) Vertreter: **Hoppe, Karin Forschungszentrum Jülich GmbH Abt. R-P 52425 Jülich (DE)**

(56) Entgegenhaltungen:
WO-A-99/44253          JP-A- 2004 288 458
US-A1- 2007 017 367    US-A1- 2007 031 710
US-A1- 2007 128 478

**Beschreibung**

Die Erfindung betrifft ein Hochtemperatur-Polymerelektrolyt-Brennstoffzellensystem (HT-PEFC), insbesondere ein mit einer dotierten Polybenzimidazol (PBI)-Membran, sowie ein Verfahren zum Betreiben eines solchen Systems.

Stand der Technik

Die Polymerelektrolyt-Brennstoffzelle (engl. Polymer Electrolyte Fuel Cell, PEFC) ist eine Niedertemperatur-Brennstoffzelle. Für Betriebstemperaturen bis 100 °C werden regelmäßig feste Polymermembranen, beispielsweise aus Nafion, eingesetzt.

Für höhere Betriebstemperaturen bis ca. 200 °C sind Nafion Membranen jedoch regelmäßig nicht mehr geeignet, da sie bei diesen Temperaturen nicht genügend Feuchtigkeit aufweisen und ihre Leitfähigkeit somit deutlich absinkt. Ferner sind sie bei Temperaturen oberhalb von 150 °C thermisch instabil. In diesen Temperaturbereichen werden daher Membranen aus Polyimid, wie beispielsweise aus Polybenzimidazol (PBI), verwendet, in welchen Phosphorsäure oder Schwefelsäure als Elektrolyt gebunden ist. Diese Materialien benötigen keine hohe relative Feuchte der Reaktionsgase, so dass ein Wassermanagement entbehrlich ist.

PBI-Membranen ermöglichen eine neue Generation von Polymerelektrolyt-Brennstoffzellen, die in der Regel kostengünstiger, effizienter und zuverlässiger sind als konventionelle Niedertemperatur-Brennstoffzellensysteme. Zudem greifen sie auf eine vereinfachte Gasaufbereitung zurück, die durch einen hohe Kohlenmonoxid- und Schwefeltoleranz gekennzeichnet ist. Ferner zeichnet sich der Betrieb einer HT-PEFC durch eine einfache Steuerung aus.

Technisch problematisch kann jedoch ein zu hoher Wassergehalt im Brenngas sein, der nachteilig zu einem Säureaustrag aus der Membran führen kann. Dadurch sinkt die Leitfähigkeit des Elektrolyten dauerhaft. Als Folge muss durch geeignete Wahl der konkreten Betriebszustände strikt darauf geachtet werden, dass kein flüssiges Wasser innerhalb der Brennstoffzelle entstehen kann.

Flüssiges Wasser kann bei zu niedriger Betriebstemperatur, bei zu geringer Luftzahl oder bei einem Gas cross over in die Membran aufgenommen werden. Als geeignete Gegenmaßnahmen während des laufenden Betriebs können die Betriebstemperatur und die Luftzahl gesteigert werden, um die relative Luftfeuchtigkeit anzusenken, und so die Gefahr der Bildung von flüssigem Produktwasser entgegen wirken.

Wird der Brennstoffzellenstapel jedoch abgeschaltet und kommt es dann dabei automatisch zu einer Abkühlung der Komponenten, so kann ohne vorherige Spülung mit Stickstoff eine Diffusion der restlichen Reaktionsgase Sauerstoff und Wasserstoff durch die Membran hindurch an die Katalysatorschichten erfolgen, die dort regelmäßig zur Ausbildung von flüssigem Wasser führt.

Zudem regiert die Säure, insbesondere die Phosphorsäure in der Membran hygroskopisch, so dass auch Wasser aus der feuchten Umgebungsluft in einer derartigen Menge aufgenommen werden kann, die sich negativ auf die Leitfähigkeit der gesamten Membran auswirkt.

Bei bekannten Hochtemperatur-Polymerelektrolyt-Brennstoffzellensystemen (HT-PEFC) werden daher die Brennstoffzellen während des Aufheizens oder auch nach dem Abschalten mit einem inerten Gas, z. B. mit Stickstoff, gespült, um die Bildung von flüssigem Wasser innerhalb der Zellen zu vermeiden. Das funktioniert jedoch nur, wenn immer eine ausreichende Menge an Spülgas vorhanden ist, beispielsweise in Form von bereitgestellten Druckgasflaschen.

Als Nachteil haben sich aber in einem solchen Fall das zusätzliche Gewicht der Gasflaschen sowie die Notwendigkeit einer Füllstandsüberwachung herausgestellt. Der Austausch der Gasflaschen in regelmäßigen Zeiträumen bewirkt zusätzliche Mehrkosten und eine mögliche Einschränkung hinsichtlich des Anwendungsbereiches.

Aus JP 2004 288 458 A ist beispielsweise ein mit Aceton und Wasserstoff betriebenes Hochtemperatur-Brennstoffzellensystem mit wenigstens einer Brennstoffzelle umfassend eine Anode, einen Anodenraum, eine Kathode, einen Kathodenraum, sowie einer zwischen Anode und Kathode angeordneten mit Säure dotierten Polybenzimidazol (PBI)-Membran bekannt. Die Brennstoffzelle weist zudem einen Betriebsmittelkreislauf auf, in dem ein erstes Mittel (Hydrogenierungsreaktor 9) angeordnet ist, in welchem die Anoden- und Kathodenagbase aus der Brennstoffzelle katalytisch in Isoproypalkohol umgesetzt werden, wobei überschüssiges $H_2$ mit Hilfe eines Separators direkt wieder zur Brennstoffzelle zurückgeleitet wird. Innerhalb des Betriebsmittelkreislaufes ist auch ein zweites Mittel (Dehydrogenierungsreaktor 4) angeordnet, in welchem der erzeugte Isopropylalkohol erneut katalytisch in Aceton und $H_2$ umgesetzt wird. Diese beiden Betriebsmittel werden anschließend direkt der Brennstoffzelle zugeführt. Ein zusätzlicher Acteontank füllt dabei in der Brennstoffzelle verbrauchtes Aceton nach. Auf diese Weise wird sichergestellt, dass der nicht umgesetzte Brennstoff im Rahmen einer effektiven Kreislaufführung aus dem Brennstoffzellenabgas abgetrennt und erneut der Brennstoffzelle zugeführt werden kann.

Aufgabe und Lösung

Aufgabe der Erfindung ist es, ein Hochtemperatur-Polymerelektrolyt-Brennstoffzellensystem (HT-PEFC) zu schaffen, bei dem die vorgenannten Nachteile überwunden werden, insbesondere der Säureaustrag aus den Membranen verhindert werden kann. Ferner ist es Aufgabe der Erfindung, ein Verfahren zum Betreiben

3    EP 2 153 486 B1    4

eines solchen Brennstoffzellensystems zur Verfügung zu stellen.

Die Aufgaben der Erfindung werden gelöst durch ein Hochtemperatur-Polymerelektrolyt-Brennstoffzellensystem mit der Gesamtheit der Merkmale des Hauptanspruchs sowie durch ein Verfahren zum Betreiben eines solchen Systems gemäß Nebenanspruch. Vorteilhafte Ausführungsformen sind den jeweils darauf rückbezogenen Unteransprüchen zu entnehmen.

Gegenstand der Erfindung

Im Rahmen der Erfindung wurde gefunden, dass es Vorteile mit sich bringt, wenn anstelle des extern zugeführten inerten Spülgases, welches bislang während des Aufheizens oder des Abkühlens eines Brennstoffzellensystems zur Spülung desselben eingesetzt wurde, dieses nunmehr vorteilhaft direkt in dem Brennstoffzellensystem selbst generiert werden kann.

Diese Erzeugung von Inertgas erfolgt erfindungsgemäß beispielsweise durch eine Sauerstoffabreicherung aus der vorhandenen Umgebungsluft oder auch aus einem im Kreislauf geführten Abgasstrom der Brennstoffzelle. Die Abreicherung des Sauerstoffs aus dem System soll deshalb erzielt werden, weil ohne den Sauerstoff keine Umwandlung zu flüssigem Wasser erfolgen kann, welches bekanntermaßen zu dem nachteiligen Säureaustrag führt.

Für die Abreicherung von Sauerstoff aus dem Umfeld der Elektrolytmembran stehen prinzipiell mehrere Möglichkeiten zur Verfügung.

Zum einen kann der Sauerstoff aus der Umgebungsluft oder einem Abgas durch eine Verbrennung mit Wasserstoff entfernt werden. In diesem Fall muss das entstehende Wasser direkt, das heißt vor Eintritt des Brennergases in die Zelle abgetrennt werden. Die Verbrennung sollte zudem stöchiometrisch erfolgen, dass heißt, dass wenigstens soviel Wasserstoff zugeführt wird, dass der gesamte Sauerstoff zu Wasser reagieren kann. Als ein dafür geeignetes Mittel ist beispielsweise ein Katalytbrenner zu nennen.

Eine weitere Alternative zur Sauerstoffentfernung aus der Umgebungsluft ist eine Vorrichtung, bei der der Sauerstoff als Sauerstoffionen durch einen Elektrolyten abtransportiert wird, ähnlich wie bei einer Hochtemperatur-Brennstoffzelle (SOFC).

Zur Sauerstoffentfernung aus der Luft können ebenfalls Vorrichtungen eingesetzt werden, die ein zur Absorption von Wasser geeignetes Mittel (Trockenmittel) aufweisen. Dies sind chemische Verbindungen mit einer besonderen inneren Struktur. Sie schließen aufgrund ihrer chemischen und strukturellen Beschaffenheit Wassermoleküle ein und ändern im Anschluss daran durch intermolekulare Kräfte ihre räumliche Molekülstruktur. Wassermoleküle können so nicht mehr aus der Struktur entweichen und bleiben gebunden. Vorteilhaft können diese Stoffe durch Wärme wieder regeneriert werden, d. h. durch eine ca. 0,5...2 Stunden dauernde Erwärmung auf ca. 130 °C kann das gebundene Wasser wieder ausgetrieben werden und die Stoffe sind erneut verwendbar. Für den Einsatz in dieser Erfindung wären insbesondere Absorberpatronen mit Silicagel oder Zeolithen geeignet.

Vorteilhaft ist auch eine oder mehrere zusätzliche Möglichkeiten, Wasser an gekühlten Abscheidern aus zu kondensieren. Dazu bieten sich insbesondere Peltierelemente an, die auf einfache Weise die entsprechend tiefen Kühltemperaturen bereitstellen können, die weit unterhalb der Umgebungstemperatur liegen sollten. Die dabei einzustellende Temperatur sollte vorteilhaft unterhalb von 5 °C liegen.

Spezieller Beschreibungsteil

Nachfolgend wird der Gegenstand der Erfindung anhand mehrerer Ausführungsbeispiele und weiterer Figuren näher erläutert, ohne dass der Gegenstand der Erfindung dadurch beschränkt wird. Es zeigen:

Figur 1:    HT-PEFC System mit $O_2$-Entfernung über eine Sauerstoffionentransportvorrichtung im Kathodenkreislauf.

Figur 2:    HT-PEFC System mit Absorberpatronen im Anoden- und Kathodenkreislauf.

Figur 3:    HT-PEFC System mit $O_2$- und $H_2$-Entfernung über einen Zirkulationskreislauf mit einem Katalytbrenner.

In den Figuren bedeuten:

BZ    HT-PEFC Brennstoffzelle, stellvertretend für das gesamte HT-PEFC System, mit
A    Anode
K    Kathode
KB    Katalytbrenner
WA    Wasserabscheider
AP    Adsorberpatrone
SM    Sauerstoffionen leitende Membran
L    Lüfter, bzw. Pumpe
a    Luft, mit (+) und ohne (-) Wasser
b    Wasserstoff, mit (+) und ohne (-) Wasser
c    Stickstoff, mit (+) und ohne (-) Sauerstoff
d    Reformat
e    Abgas

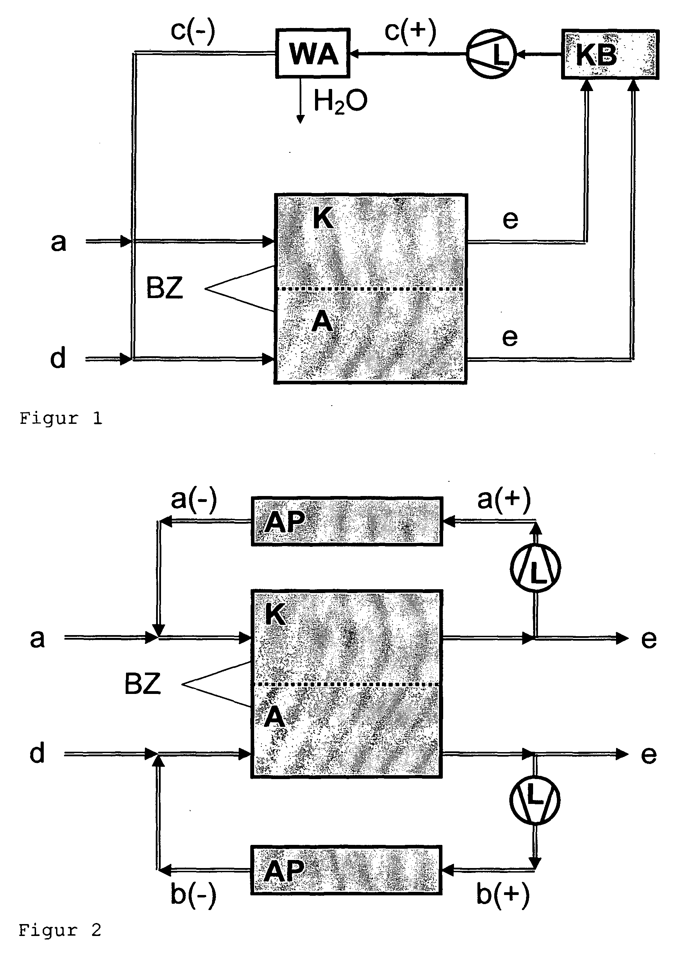

Eine erste Ausführungsform der Erfindung ist in Figur 1 dargestellt. Dort ist in einem Hochtemperatur-Polymerelektrolyt-Brennstoffzellensystem (HT-PEFC) als separates Mittel zur Entfernung von Sauerstoff eine separate Abreicherungszelle, die im Aufbau einer SOFC entspricht, vorgesehen. Diese ist im Umluftkreislauf auf der Kathodenseite angeordnet. Um die Zelle in der Abschaltphase von Sauerstoff abzureichern, wird die Abreicherungszelle extern mit Strom und Spannung beaufschlagt. Die Bildung und Wanderung von Sauerstoffionen durch den keramischen Elektrolyten entfernt so weitgehend den Sauerstoff aus dem Kreislauf. Der Sauerstoff

3

wird somit auf einen Gehalt zwischen 5 und 1 Vol.-%, vorteilhaft auf einen Gehalt kleiner 1 Vol.-%, und insbesondere kleiner als 0,1 Vol.-% reduziert.

Vorteilhaft bei dieser Ausgestaltung kann der dabei verwendete Lüfter während des regulären Betriebs der HT-PEFC zur Umwälzung der Kathodenluft eingesetzt werden, wodurch die Gleichverteilung des kathodenseitigen Sauerstoffpartialdrucks positiv beeinflusst wird. Der in der Abreicherungszelle abgeschiedene Sauerstoff kann entweder direkt an die Umgebung geführt oder für eine spätere Verwendung zwischengespeichert werden.

Als weitere Ausgestaltung dieser Variante ist auch vorgesehen, den in dem System vorhandenen Sauerstoff zunächst elektrochemisch umzusetzen. Dies ist aber auf Grund von elektrochemischen Gegebenheiten nur bis zu einem gewissen Grad möglich, ohne die Zellen irreversibel zu schädigen. Anschließend oder auch gleichzeitig erfolgt die Abreicherung des Sauerstoffs durch die vorher beschriebene Abreicherungszelle.

Die Abreicherungszelle selbst kann im Vergleich zum HT-PEFC Stapel klein und kompakt aufgebaut sein. Beispielsweise benötigt ein HT-PEFC Stack der 5 kW-Klasse, ein äußeres Volumen von ca. 20 L. Das innere Volumen der Kathode, d. h. der Luftmenge, liegt dann bei etwa 2 L, wenn man übliche Verteilerstrukturen (Manifolds) und Kanalgeometrien voraussetzt. Inklusive der in Figur 1 gezeigten Komponenten für die Luftzirkulation, wie z. B. Lüfter, Ventile und Verrohrung, ergibt sich für das gesamte abzureichernde Luftvolumen ein Wert von maximal 5 L. Davon sind ca. 21 % Sauerstoff, d. h. ca. 1 L.

Im Fall der Abschaltung, bzw. Abkühlung des Stapels steht zur Abreicherung dieser Menge ein Zeitintervall $\Delta t$ zur Verfügung, welches ungefähr der Abkühlzeit von 160 °C auf 120 °C entspricht. Bis zu diesen Temperaturen ist die Gefahr der Wasserausscheidung noch sehr gering. Dies kann überschlägig zu $\Delta t = 10$ min, bzw. 600 s abgeschätzt werden. Die Abreicherungszelle müsste demnach einen mittleren Strom I bereitstellen, der sich errechnen lässt aus:

$$I = \frac{4 N_{O_2} \cdot F}{\Delta t}$$

mit

$N_{O_2}$  = 1 1 / 22,414 l/mol = 0,045 mol
$\Delta t$  = 300 s,
F  = 96485 A s/mol

ergibt sich somit ein Strom von ca. 30 A. Teilt man dies analog zur Stapelbauweise auf vier Abreicherungszellen auf, so reduziert sich der benötigte Strom auf jeweils 7,5 A.

Auch auf der Anodenseite kann der so erzeugte Stickstoff zur Inertisierung genutzt werden. Möglich wird dies unter Zuhilfenahme geeigneter Schalt- und Regelventile.

Ergänzt werden kann das erfindungsgemäße System sowohl auf der Kathodenseite, als auch auf der Anodenseite um Wasserabscheider, die in den Kreisläufen angeordnet sind und dort die Gase trocknen.

Anstelle eines Wasserabscheiders kann auch eine Absorberpatrone eingesetzt werden. In Figur 2 ist ein weiteres Ausführungsbeispiel der Erfindung zu sehen. Dabei ist vorteilhaft sowohl in dem Anodenkreislauf, als auch in dem Kathodenkreislauf jeweils eine Absorberpatrone angeordnet, die insbesondere Wasser aus den jeweiligen Kreislaufmedien absorbiert und damit dem Kreislauf entzieht. Für die Absorption von Wasser aus Luft auf der Kathodenseite wären Silicagel oder Zeolithe ebenso geeignet, wie als Absorptionsmaterial für den wasserstoffhaltigen Anodenkreislauf.Vorteil haft kann das in den Absorberpatronen absorbierte Wasser während des Betriebs des HT-PEFC Systems durch Erhitzung wieder desorbiert werden, so dass die Absorberpatronen regelmäßig auf lange Zeit im System verbleiben können und nicht ausgewechselt werden müssen.

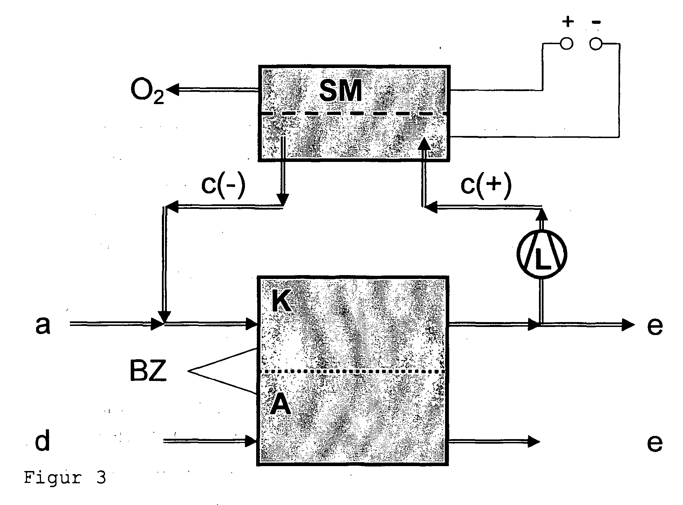

Eine weitere Ausgestaltung der Erfindung zeigt Figur 3. Dort wird das Kathodenabgas sowie das Anodenabgas gemeinsam durch einen Katalytbrenner geleitet, wo der Sauerstoff unter Bildung von Wasserdampf und gegebenenfalls $CO_2$ aus dem Abgas entfernt wird. Dazu werden die Zu- und Ableitungen der Reaktanden durch Ventile (nicht in Figur 3 eingezeichnet) so geschaltet, dass ein Kreislauf mit dem Lüfter entsteht. Das Produktwasser aus dem Brenner kann beispielsweise wiederum durch absorptive Verfahren abgeschieden werden.

**Patentansprüche**

1.  Hochtemperatur-Polymerelektrolyt-Brennstoffzellensystem (HT-PEFC), umfassend wenigstens eine Brennstoffzelle

    - mit einer Anode, einem Anodenraum, einer Kathode, einem Kathodenraum sowie einer zwischen Anode und Kathode angeordneten, mit Säure dotierten Polybenzimidazol (PBI)-Membran,
    - mit wenigstens einem Betriebsmittelkreislauf, und
    - mit wenigstens einem zusätzlichen, separaten Mittel zur Entfernung von Sauerstoff und/oder Wasser aus dem Betriebsmittelkreislauf,

    **dadurch gekennzeichnet,**
    **dass** das zusätzliche, separate Mittel eine Sauerstoff leitende Membran, eine Absorberpatrone oder ein Brenner zur Verbrennung von Abgasen aus der Brennstoffzelle ist.

**2.** Brennstoffzellensystem nach Anspruch 1, mit einer elektrisch kontaktierten, Sauerstoff leitenden Membran, die im Kathodenkreislauf angeordnet ist, als zusätzliches, separates Mittel.

**3.** Brennstoffzellensystem nach Anspruch 1, mit einer Adsorberpatrone, die im Kathodenkreislauf angeordnet ist oder mit einer Adsorberpatrone, die im Anodenkreislauf angeordnet ist, als zusätzliches, separates Mittel.

**4.** Brennstoffzellensystem nach Anspruch 1, mit zwei Absorberpatronen, von denen jeweils eine im Anoden - und eine im Kathodenkreislauf angeordnet sind.

**5.** Brennstoffzellensystem nach Anspruch 1, mit einem Katalytbrenner als Mittel zur Entfernung von Sauerstoff, als zusätzliches, separates Mittel.

**6.** Brennstoffzellensystem nach Anspruch 1 bis 5, mit einem Brenner, sowie einer dem Brenner nachgeschalteten Vorrichtung zur Wasserabscheidung, wobei beide Bauteile gemeinsam in einem zusammengeführten Anoden- und Kathodenkreislauf angeordnet sind.

**7.** Verfahren zum Betreiben eines Hochtemperatur-Polymerelektrolyt-Brennstoffzellensystems (HT-PEFC), umfassend wenigstens eine Brennstoffzelle

- mit einer Anode, einem Anodenraum, einer Kathode, einem Kathodenraum, einer zwischen Anode und Kathode angeordneten, Säure dotierten Polybenzimidazol (PBI)-Membran,
- mit wenigstens einen Betriebsmittelkreislauf und
- mit einem darin angeordneten zusätzlichen, separaten Mittel zur Entfernung von Sauerstoff und/oder Wasser aus dem in dem Betriebsmittelkreislauf,

**dadurch gekennzeichnet,**
**dass** der Sauerstoff und/oder das Wasser mit Hilfe eine Sauerstoff leitenden Membran, einer Absorberpatrone oder einem Brenner zur Verbrennung von Abgasen aus der Brennstoffzelle entfernt wird.

**8.** Verfahren nach Anspruch 7, bei dem die Entfernung von Sauerstoff und/oder Wasser während des Aufheizens oder des Abkühlens des Systems durchgeführt wird.

**9.** Verfahren nach Anspruch 7 bis 8, bei dem aus dem im Kreislauf geführten Kathodenabgas oder aus dem im Kreislauf geführten Anodenabgas oder sowohl aus dem im Kreislauf geführten Anodenabgas als auch aus dem im Kreislauf geführten Kathodenabgas Wasser mit Hilfe jeweils einer Absorberpatrone entfernt wird.

**10.** Verfahren nach Anspruch 7 bis 8, bei dem aus dem im Kreislauf geführten Kathodenabgas Sauerstoff mit Hilfe einer keramischen, Sauerstoff leitenden Membran entfernt wird.

**11.** Verfahren nach Anspruch 7 bis 8, bei dem das Anoden- und das Kathodenabgas gemeinsam einem Brenner zugeführt werden, und der in dem Abgas enthaltene Sauerstoff verbrannt wird.

**12.** Verfahren nach Anspruch 11, bei dem das Wasser aus dem Wasseraufweisenden Abgas des Brenners abgeschieden wird, bevor das wasserfreie Abgas wieder der Brennstoffzelle zugeführt wird.

**Claims**

**1.** High temperature polymer electrolyte fuel cell system (HT-PEFC), comprising at least one fuel cell

- with an anode, an anode area, a cathode and a cathode area as well as a polybenzimidazole (PBI) membrane endowed with acids arranged between the anode and the cathode,
- with at least one operating fluid circuit and
- with at least one additional, separate means of removing oxygen and/or water from the operating fluid circuit,

**characterised in that**,
the additional separate means is an oxygen conducting membrane, an absorber cartridge or a burner for burning exhaust gases from the fuel cell.

**2.** Fuel cell system according to claim 1, with an electrically contacted, oxygen conducting membrane, which is arranged in the cathode circuit, as an additional, separate means.

**3.** Fuel cell system according to claim 1, with an adsorber cartridge, which is arranged in the cathode circuit, or with an adsorber cartridge, which is arranged in the anode circuit, as an additional, separate means.

**4.** Fuel cell system according to claim 1, with two absorber cartridges, of which one is arranged in the anode circuit and one in the cathode circuit.

**5.** Fuel cell system according to claim 1, with a catalytic burner as a means of removing oxygen as an additional, separate means.

**6.** Fuel cell system according to claim 1 to 5, with a burner as well as a device downstream of the burner for extracting water, in which both components are arranged together in a joint anode and cathode circuit.

**7.** Method for operating a high temperature polymer electrolyte fuel cell system (HT-PEFC), comprising at least one fuel cell - with an anode, an anode area, a cathode, a cathode area and a polybenzimidazole (PBI) membrane endowed with acids arranged between the anode and the cathodes,

- with at least one operating fluid circuit and
- with an additional, separate means of removing oxygen and/or water from the operating fluid circuit arranged in it, **characterised in that**,

the oxygen and/or water is removed from the fuel cell using an oxygen conducting membrane, an absorber cartridge or a burner for burning exhaust gases.

**8.** Method according to claim 7, in which the removal of oxygen and/or water is carried out whilst the system is heating up or cooling down.

**9.** Method according to claim 7 to 8, in which water is removed from the cathode exhaust gas conducted from the circuit or the anode exhaust gas conducted in the circuit as well as from the anode exhaust gas conducted from the circuit and the cathode exhaust gas conducted in the circuit using an absorber cartridge.

**10.** Method according to claim 7 to 8, in which oxygen is removed from the cathode exhaust gas conducted in the circuit using a ceramic, oxygen conducting membrane.

**11.** Method according to claim 7 to 8, in which the anode and cathode exhaust gas is conducted jointly to a burner and the oxygen contained in the exhaust gas is burnt.

**12.** Method according to claim 11, in which the water is extracted from the exhaust gas of the burner containing water, before the water free exhaust gas is conducted to the fuel cells again.

**Revendications**

**1.** Système de pile à combustible à électrolyte polymère à haute température (HT-PEFC), comprenant au moins une pile à combustible

- ayant une anode, une chambre anodique, une cathode, une chambre cathodique, ainsi qu'une membrane de polybenzimidazole (PBI) dopé à l'acide et disposée entre l'anode et la cathode,
- ayant au moins un circuit de liquide d'exploitation, et
- ayant au moins un moyen supplémentaire séparé pour éliminer l'oxygène et/ou l'eau du circuit de liquide d'exploitation,

**caractérisé en ce que**
le moyen supplémentaire séparé est une membrane conductrice d'oxygène, une cartouche absorbante ou un brûleur pour la combustion des gaz d'échappement de la pile à combustible.

**2.** Système de pile à combustible selon la revendication 1, ayant une membrane conductrice d'oxygène, contactée électriquement et disposée dans le circuit de la cathode comme moyen supplémentaire séparé.

**3.** Système de pile à combustible selon la revendication 1, ayant une cartouche absorbante, qui est disposée dans le circuit de la cathode ou ayant une cartouche absorbante, qui est disposée dans le circuit de l'anode, comme moyen supplémentaire séparé.

**4.** Système de pile à combustible selon la revendication 1, ayant deux cartouches absorbantes dont respectivement l'une est disposée dans l'anode - et l'autre dans le circuit de la cathode.

**5.** Système de pile à combustible selon la revendication 1, ayant un brûleur catalytique en tant que moyen pour éliminer l'oxygène, comme moyen supplémentaire séparé.

**6.** Système de pile à combustible selon la revendication 1 à 5, ayant un brûleur ainsi qu'un dispositif monté après le brûleur destiné à l'évacuation de l'eau, où les deux composants sont disposés communément dans un circuit de cathode et d'anode réunis.

**7.** Procédé d'exploitation d'un système de pile à combustible à électrolyte polymère à haute température (HT-PEFC), comprenant au moins une pile à combustible

- ayant une anode, une chambre anodique, une cathode, une chambre cathodique, et une membrane de polybenzimidazole (PBI) dopé à l'acide et disposée entre l'anode et la cathode,
- ayant au moins un circuit de liquide d'exploitation, et

- ayant au moins un moyen supplémentaire séparé disposé à l'intérieur de celui-ci pour éliminer l'oxygène et/ou l'eau du circuit de liquide d'exploitation,

**caractérisé en ce que** l'oxygène et/ou l'eau sont éliminés à l'aide d'une membrane conductrice d'oxygène, d'une cartouche absorbante ou d'un brûleur pour la combustion des gaz d'échappement de la pile à combustible.

8. Procédé selon la revendication 7, dans lequel l'élimination de l'oxygène et/ou de l'eau est réalisée pendant le chauffage ou le refroidissement du système.

9. Procédé selon la revendication 7 à 8, dans lequel l'eau est éliminée du gaz d'échappement cathodique conduit dans le circuit ou aussi bien du gaz d'échappement anodique conduit dans le circuit que du gaz d'échappement cathodique conduit dans le circuit à l'aide respectivement d'une cartouche absorbante.

10. Procédé selon la revendication 7 à 8, dans lequel l'oxygène est éliminé du gaz d'échappement cathodique conduit dans le circuit à l'aide d'une membrane en céramique conductrice d'oxygène.

11. Procédé selon la revendication 7 à 8, dans lequel le gaz d'échappement anodique et le gaz d'échappement cathodique sont conduits conjointement à un brûleur et l'oxygène contenu dans le gaz d'échappement est brûlé.

12. Procédé selon la revendication 11, dans lequel l'eau est évacuée du gaz d'échappement aqueux du brûleur avant que le gaz d'échappement anhydre ne soit reconduit dans la pile à combustible.

Figur 1

Figur 2

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2004288458 A